# EUROPEAN PATENT APPLICATION

(11) **EP 2 484 215 A1**
(43) Date of publication of application: **08.08.2012**
(21) Application number: 11794384.5
(22) Date of filing: 30.03.2011
(51) Int. Cl.: A23C 9/152

(54) **GREEN MILK**

(30) Priority: 25.06.2010 CN 201010209621
(71) Applicant: Xu, Xinyue, Hangzhou, Zhejiang 310053 (CN)
(72) Inventor: Xu, Xinyue, Hangzhou, Zhejiang 310053 (CN)
(74) Representative: Pallini, Diego
(86) International application number: PCT/CN2011/000545
(87) International publication number: WO 2011/160420

(57) **Abstract**

This invention involves in the field of food and beverage and provides green milk comprising whole milk or fermented milk and 0.1-20% by weight of natural phytonutrients or components from herbal cuisine. This invention provides green milk that has balanced nutrients and is easily digested and absorbed by children and seniors. The green milk facilitates the absorption of proteins, vitamins, mineral substances, enzymes, and natural chlorophyll, and provides necessary nutrients that may not be obtained from other daily diet. Statistics show that the green milk is of high nutrition value and the absorbed dose of proteins, vitamins, and mineral substances in green milk is increased by 12.5%∼35.7% comparing to milk only.

## Description

### FIELD OF INVENTION

This invention involves in the field of food and drink, especially green milk and other green dairy products.

### BACKGROUND OF INVENTION

In recent years, with the massive international research on human nutrition, the concept of modern food engineering has been proposed. The International Food Science and Technology Meeting held in Sydney, Australian has further highlighted the theme: "natural" and "functionalization" in modem food engineering and emphasized that the modem food technologies should be back to nature. Milk, a natural food rich in nutrition, easy to absorb and inexpensive, is a "nearly perfect food". People call it "white blood", meaning the ideal natural food. The main proteins in milk are casein, albumin, globulin, and lactoprotein and so on. There are twenty kinds of amino acids in milk including the eight kinds of essential amino acids for human body. Digestibility of milk protein is over 98%. Milk fat is of high quality; its digestibility is above 95%; and it contains ample fat-soluble or lipophilic vitamins. The lactose in milk is galactose, which can be easily digested and absorbed. The mineral substances and trace elements in milk are all soluble. The mineral substances, especially calcium and phosphorus, are in good proportion and can be easily digested and absorbed.

Milk and dairy products such as cheese contain a material called CLA which can break down carcinogenic free radical and heal cell membrane quickly. It can prevent cancer by defending the body cells from carcinogen invasion. In addition, the calcium in milk can break down carcinogen in human's intestinal track and eliminate the harmful substances out of the body. Studies have shown that vitamin A, vitamin B2, vitamin D, etc in milk have the protective effects against carcinomas such as gastric cancer and colon cancer.

There are many kinds of immunoglobulin, antibodies and protective play a role in cancer prevention. In addition, the enzymes in dairy products like yoghurt can protect cancer patients from the side effect of chemotherapy and radiotherapy treatments.

Milk is full of nutrients. It contains high-quality fat, proteins, vitamins, mineral substances, especially vitamin B, all of which play an important role in skin care by nourishing skin, protecting epidermis, working against crack and wrinkles, leaving skin smooth, white, and soft. It also helps darken hairs and prevent hair loss. The iron, copper, and vitamin A in milk help maintain skin beauty and make skin youthful, smooth, and elastic. The whey components in milk have anti-wrinkle function. Milk not only can provide skin with oil and form a thin film to prevent moisture evaporation, but also supply skin with moisture temporarily. Therefore, milk can be used as "natural skin care product" and "green skin care product."

Natural phytonutrients are extracted from natural green plants and contain a variety of vitamins, mineral substances, nutrients, chlorophyll and active enzymes. Natural phytonutrients can supply all kinds of nutrients that may not be easily obtained or absorbed from other daily diet. Natural phytonutrients are safe and reliable to eat in high health promoting value without the side effect.

Milk is one common nourishing food and is regarded as the ideal emulsion for many nutrient substances, medicines, and other bioactive components or the carrier of nutrition. Although people have developed many kinds of milk or dairy products which have been enhanced by nutrients, such as fortified calcium, vitamin A, D, taurine, etc., it has not been reported that natural phytonutrients are added into milk or any other dairy products.

### DESCRIPTION OF INVENTION

This invention aims at overcoming the shortcoming of the existing technologies or methods applying to the dairy products such as adding fortified calcium, vitamin A, D, taurine, etc into milk. The nutrient substances in these existing milk products are lack of green color and real natural phytonutrients from green plants, which can be easily absorbed by all age groups of people, particularly children and senior people. This invention provides green milk that has balanced nutrients by adding 100% natural phytonutrients to milk or other dairy products.

In order to achieve the maximal benefits and most balanced nutrients available to all age groups, this invention provides the following.
Green milk comprising whole skim milk, low/non fat milk, lactose-free milk, fermented milk and any other dairy products and natural phytonutrients by adding, blending or combining the natural phytonutrients in weight percentage of 0.1% - 20% to the milks or other diary products. The formulae cause milk to have natural green color, abundant mineral substances, proteins, vitamins, active enzymes, natural chlorophyll and essential trace elements for human body and make people's dietary structure most suitable and balanced.

Preferably, the phytonutrients include one or two or more mixtures of grass juice powder, vegetable juice powder, and other edible plant powders or herbal cuisine with milk and other dairy products to maximize the benefit of full nutrients for body absorption.

Preferably, the grass powder is one or two or more mixtures of barley grass powder, wheat grass powder, highland barley powder, buckwheat sprout powder, black barley grass powder, oat seed powder, and wild oat seed powder.

Preferably, the edible plant powder or herbal cuisine is one or two or more mixtures of blueberry powder, medlar powder, ginseng powder, momordica grosvenori powder, grape seed powder, and ginkgo leaf extract.

Preferably, the vegetable powder is one or two or more mixtures of tomato powder, carrot powder, red radish powder, and alfalfa meal.

Preferably, the grass powder, vegetable powder, and edible plant powder or herbal cuisine in natural phytonutrients take up 10-70%, 20-70%, 10-20% of the total weight respectively.

Preferably, the weight ratio of barley grass powder, wheat grass powder, and highland barley powder is 3:2:1.

Preferably, the weight percentage of blueberry powder, ginkgo leaf extract, medlar powder, and ginseng powder is 1:0.1:0.5:0.2.

Preferably, the weight ratio of tomato powder, carrot powder, red radish powder, and alfalfa meal is 2:2:1.5:1.

This invention provides health benefits to all people by adding, blending or combining existing milk and/or dairy products with various natural phytonutrients stated above. This invention provides a balanced nutrition structure. Milk with natural phytonutrients is easily digested and absorbed. It provides human body with all essential nutrients which may not be obtained or absorbed from other daily diet. It is a safe and reliable way to take plentiful proteins, vitamins, mineral substances, natural chlorophyll and active enzymes. In addition to the benefits mentioned above and being 100% natural without any side effect, it improves shelf life and storage condition of green milk and green dairy products. It also improves product appearance.

### DETAILED DESCRIPTION OF THE INVENTION

This invention is further illustrated below by specific and working examples:

### Example 1

Green milk, including whole milk and other dairy products, contains 0.1% by weight natural phytonutrients or components of herbal cuisine from various sources by adding, blending or combining natural phytonutrients or components of herbal cuisine from various sources.

The natural phytonutrients contain grass powder, vegetable powder and edible botanic plant powder or components from herbal cuisine.

The grass powder is barley grass powder.

The edible plant powder or herbal cuisine is blueberry powder.

The vegetable powder is tomato powder.

The grass powder, vegetable powder and edible plant powder or herbal cuisine in natural phytonutrients take up 60%, 30%, 10% respectively of the total weight.

Milk by adding or blending with various natural phytonutrients stated above has a balanced nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 2

Green milk, including whole milk and other dairy products, contains 1% by weight natural phytonutrients or components of herbal cuisine from various sources by adding, blending or combining natural phytonutrients or components of herbal cuisine from various sources.

The natural phytonutrients contain grass powder, vegetable powder, and edible plant powder or components of herbal cuisine.

The grass powder is wheat grass powder.

The edible plant powder or herbal cuisine is blueberry powder.

The vegetable powder is tomato powder.

The grass powder, vegetable powder and edible plant powder in natural phytonutrients take up 70%, 20%, 10% respectively of the total weight.

Milk by adding or blending with various natural phytonutrients stated above has a balanced nutrition structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 3

Green milk, including fermented milk, contains 0.1% by weight natural phytonutrients or components of herbal cuisine from various sources by adding, blending or combining natural phytonutrients or components of herbal cuisine from various sources.

The natural phytonutrients contain grass powder, vegetable powder, and edible plant powder

The grass powder is highland barley powder.

The edible plant powder or herbal cuisine is medlar powder.

The vegetable is tomato powder.

The grass powder, vegetable powder and edible plant powder in natural phytonutrients take up 60%, 30%, 10% respectively of the total weight.

Milk by adding or blending with various natural phytonutrients stated above has balanced nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 4

Green milk, including fermented milk, contains 0.5% by weight natural phytonutrients or components of herbal cuisine from various sources by adding, blending or combining natural phytonutrients or components from herbal cuisine from various sources.

The natural phytonutrients contain grass powder, vegetable powder, and edible plant powder.

The grass powder is barley grass powder.

The edible plant powder or herbal cuisine is ginseng powder.

The vegetable powder is red radish powder.

The grass powder, vegetable powder and edible plant powder in natural phytonutrients take up 50%, 40%, 10% by weight respectively of the total weight.

Milk with the natural phytonutrients has balanced nutrition structure. Natural phytonutrients are easily digested and absorbed and can provide human body with all necessary nutrients which are hardly absorbed from daily diet. It is a safe and reliable way to get plentiful protein, vitamin, mineral substance, natural chlorophyll and active enzymes. Besides being natural and having no side-effect, it is of high nutrient value. It not only improves the quality of nutrition, but also improves the appearance of milk and storage property.

### Example 5

Green milk, including fermented milk, contains 0.5% by weight natural phytonutrients or components of herbal cuisine from various sources by adding, blending or combining natural phytonutrients or components of herbal cuisine from various sources.

The natural phytonutrients contain grass powder, vegetable powder, and edible plant powder.

The grass powder is wheat grass powder.

The edible plant powder or herbal cuisine is fructose momordicae powder.

The vegetable powder is carrot powder.

The grass powder, vegetable powder and edible plant powder in natural phytonutrients take up 40%, 40%, 20% respectively of the total weight.

Milk by adding, blending with various natural phytonutrients stated above has balanced nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% nature without any side effect, it improves shelf life and storage condition of green milk and green dairy products. It also improves product appearance, green milk.

### Example 6

Green milk, including whole milk, contains 0.5% by weight natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is buckwheat sprout powder.

The edible plant powder or herbal cuisine is fructose momordicae powder.

The vegetable powder is carrot powder.

The grass powder, vegetable powder and edible plant powder in natural phytonutrients take up 40%, 40%, 20% respectively of the total weight.

Milk by adding, blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 7

Green milk, including whole milk, contains 0.5% by weight natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is oat-seed powder.

The edible plant powder or herbal cuisine is grape seed powder.

The vegetable powder is carrot powder.

The grass powder, vegetable powder and edible plant powder in natural phytonutrients take up 50%, 40%, 10% respectively of the total weight.

Milk by adding, blending with various natural phytonutrients stated above will balance the nutrient structure and be easily digested, absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 8

Green milk, including fermented milk, contains 0.5% by weight natural phytonutrients or components from herbal cuisine from various sources by adding, blending or combining natural phytonutrients or components from herbal cuisine from various sources.

The natural phytonutrients contains grass powder, vegetable powder, and edible plant powder.

The grass powder is black barley grass powder.

The edible plant powder or herbal cuisine is ginkgo leaf extract.

The vegetable powder is alfalfa meal.

The grass powder, vegetable powder and edible plant powder in natural phytonutrients take up 60%, 30%, 10% respectively of the total weight.

Milk by adding, blending with various natural phytonutrients stated above has a balanced nutrition structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 9

Green milk, including whole milk, contains 0.5% by weight natural phytonutrients or components from herbal cuisine from various sources by adding, blending or combining natural phytonutrients or components from herbal cuisine from various sources.

The natural phytonutrients contain barley grass powder, vegetable powder, and edible plant powder.

The grass powder is wild oat seed powder.

The edible plant powder or herbal cuisine is ginkgo leaf extract.

The vegetable powder is alfalfa meal.

The grass powder, vegetable powder and edible plant powder in natural phytonutrients take up 60%, 30%, 10% respectively of the total weight.

Milk by adding or blending with various natural phytonutrients stated above has a balance the nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and 100% nature without any side effect, it improves shelf life and storage condition of green milk and green dairy products. It also improves product appearance, green milk.

### Example 10

Green milk, including whole milk, contains 1% by weight natural phytonutrients or components from herbal cuisine from various sources by adding, blending or combining natural phytonutrients or components from herbal cuisine from various sources.

The natural phytonutrients contains grass powder, vegetable powder, and edible plant powder.

The grass powder is barley grass powder.

The edible plant powder or herbal cuisine is ginkgo leaf extract.

The vegetable powder is alfalfa meal.

The grass powder, vegetable powder and edible plant powder in natural phytonutrients take up 60%, 30%, 10% respectively of the total weight.

Milk by adding or blending with various natural phytonutrients stated above has a balanced the nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 11

Green milk, including fermented milk, contains 1% by weight natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is barley grass powder.

The edible plant powder or herbal cuisine is grape seed powder.

The vegetable powder is carrot powder.

The grass powder, vegetable powder and edible plant powder in natural phytonutrients take up 40%, 50%, 10% respectively of total weight.

A milk by adding, blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelve life and storage condition of green milk and green dairy products. It also increases product appearance, green milk.

### Example 12

Green milk, including whole milk, contains 1% by weight natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is wheat grass powder.

The edible plant powder or herbal cuisine is blueberry powder.

The vegetable powder is alfalfa meal.

The grass powder, vegetable powder and edible plant powder in natural phytonutrients take up 30%, 50%, 20% respectively of the total weight.

Milk by adding or blending with various natural phytonutrients stated above will balance the nutrient structure and be easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 13

Green milk, including whole milk, contains 5% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is highland barley powder.

The edible plant powder or herbal cuisine is medlar powder.

The vegetable powder is red radish powder.

The grass powder, vegetable powder and edible plant powder in natural phytonutrients take up 60%, 20%, 20% respectively of the total weight.

Milk by adding, blending with various natural phytonutrients stated above will balance the nutrient structure and be easily digested, absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 14

Green milk, including whole milk, contains 5% by weight natural phytonutrients or components from herbal cuisine from various sources by adding, blending or combining natural phytonutrients or components from herbal cuisine from various sources.

The natural phytonutrients contains grass powder, vegetable powder, and edible plant powder.

The grass powder is highland barley powder.

The edible plant powder or herbal cuisine is ginkgo leaf extract.

The vegetable powder is carrot powder.

The grass powder, vegetable powder and edible plant powder in natural phytonutrients take up 50%, 40%, 10% respectively of the total weight.

Milk by adding, blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 15

Green milk, including fermented milk, contains 5% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is barley grass powder.

The edible plant powder or herbal cuisine is ginkgo leaf extract.

The vegetable powder is alfalfa meal.

The grass powder, vegetable powder and edible plant powder in natural phytonutrients take up 50%, 40%, 10% respectively of the total weight.

Milk by adding, blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 16

Green milk, including fermented milk, contains 10% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is wheat grass powder.

The edible plant powder or herbal cuisine is blueberry powder.

The vegetable powder is tomato powder.

The grass powder, vegetable powder and edible plant powder in natural phytonutrients take up 50%, 40%, 10% respectively of the total weight.

Milk by adding, blending with various natural phytonutrients stated above will balance the nutrient structure and be easily digested or absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearing, green milk.

### Example 17

Green milk, including whole milk, contains 10% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is highland barley powder.

The edible plant powder or herbal cuisine is medlar powder.

The vegetable powder is tomato powder.

The grass powder, vegetable powder and edible plant powder in natural phytonutrients take up 30%, 50%, 20% respectively of the total weight.

Milk by adding, blending with various natural phytonutrients stated above will balance the nutrient structure and be easily digested, absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearing, green milk.

### Example 18

Green milk, including whole milk, contains 15% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is barley grass powder.

The edible plant powder or herbal cuisine is ginseng powder.

The vegetable powder is tomato powder.

The grass powder, vegetable powder and edible plant powder in natural phytonutrients take up 50%, 30%, 20% respectively of the total weight.

Milk by adding, blending with various natural phytonutrients stated above will balance the nutrient structure and be easily digested, absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 19

Green milk, including whole milk, contains 15% natural phytonutrients or components from herbal cuisine from various sources by adding, blending or combining natural phytonutrients or components from herbal cuisine from various sources.

The natural phytonutrients contain grass powder, vegetable powder, and edible plant powder.

The grass powder is barley grass powder.

The edible plant powder or herbal cuisine is mixture of blueberry powder, medlar powder, ginseng powder, fructose momordicae powder, grape seed powder, and ginkgo leaf extract.

The vegetable powder is mixture of tomato powder, carrot powder, red radish powder, and alfalfa meal.

The grass powder, vegetable powder and edible plant powder in natural phytonutrients take up 70%, 20%, 10% respectively of the total weight.

The weight ratio of blueberry powder, ginkgo leaf extract, medlar powder, ginseng powder, fructose momordicae powder, and grape seed powder, is 1 : 0.1 : 0.5 : 0.2 : 0.1 : 0.1.

The weight ratio of tomato powder, carrot powder, red radish powder, and alfalfa meal is 2 : 2 : 1.5 : 1.

Milk by adding or blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and 100% nature without any side effect, it improves shelf life and storage condition of green milk and green dairy products. It also improves product appearance, green milk.

### Example 20

Green milk, including whole milk, contains natural phytonutrients of weight percentage 15%.

The natural phytonutrients contain grass powder, vegetable powder, and edible plant powder.

The grass powder is wheat grass powder.

The edible plant powder or herbal cuisine is mixture of blueberry powder, medlar powder, ginseng powder, ginkgo leaf extract.

The vegetable powder is mixture of tomato powder, carrot powder, red radish powder, and alfalfa meal.

The grass powder, vegetable powder and edible plant powder in natural phytonutrients take up 60%, 20%, 20% respectively of the total weight.

The mixed weight ratio of blueberry powder, ginkgo leaf extract, medlar powder, and ginseng powders is 1 : 0.1 : 0.5 : 0.2 : .

The weight ratio of tomato powder, carrot powder, red radish powder, and alfalfa meal is 2 : 2 : 1.5 : 1.

Milk by adding or blending with various natural phytonutrients stated above has a balanced nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 21

Green milk, including whole milk, contains 15% by weight natural phytonutrients or components of herbal cuisine from various sources by adding, blending or combining natural phytonutrients or components from herbal cuisine from various sources.

The natural phytonutrients contain grass powder, vegetable powder, and edible plant powder.

The grass powder is mixture of barley grass powder, wheat grass powder, and highland barley powder.

The edible plant powder is mixture of blueberry powder, medlar powder, ginseng powder, and ginkgo leaf extract.

The vegetable powder is mixture of tomato powder, carrot powder, red radish powder, and alfalfa meal.

The grass powder, vegetable powder and edible plant powder in natural phytonutrients take up 50%, 40%, 10% respectively of the total weight.

The weight ratio of barley grass powder, wheat powder, and highland barley powder is 3 : 2 : 1.

The weight ratio of blueberry powder, ginkgo leaf extract, medlar powder, and ginseng powders 1 : 0.1 : 0.5 : 0.2.

The mixed weight proportion of tomato powder, carrot powder, red radish powder, and alfalfa meal is 2 : 2 : 1.5 : 1.

Milk by adding and blending with various natural phytonutrients stated above has a balanced nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 22

Green milk, including whole milk, contains natural phytonutrients of weight percentage 20%.

The natural phytonutrients contain grass powder, vegetable powder, and edible plant powder.

The grass powder is barley grass powder.

The edible plant powder is mixture of blueberry powder, medlar powder, ginseng powder, and ginkgo leaf extract.

The vegetable powder is mixture of tomato powder, carrot powder, red radish powder, and alfalfa meal.

The grass powder, vegetable powder and edible plant powder in natural phytonutrients take up 45%, 45%, 10% by weight respectively of the total weight.

The weight ratio of blueberry powder, ginkgo leaf extract, medlar powder, and ginseng powder is 1 : 0.1 : 0.5 : 0.2.

The weight ratio of tomato powder, carrot powder, red radish powder, and alfalfa meal is 2 : 2 : 1.5 : 1.

Milk by adding, blending with various natural phytonutrients stated above has a balance the nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 23

Green milk, including whole milk, contains 20% natural phytonutrients or components from herbal cuisine from various sources by adding, blending or combining natural phytonutrients or components from herbal cuisine from various sources.

The natural phytonutrients contains barley grass powder, vegetable powder, and edible plant powder.

The grass powder is wheat grass powder.

The edible plant powder or herbal cuisine is mixture of blueberry powder, medlar powder, ginseng powder, and ginkgo leaf extract.

The vegetable powder is mixture of tomato powder, carrot powder, red radish powder, and alfalfa meal.

The grass powder, vegetable powder and edible plant powder in natural phytonutrients take up 40%, 50%, 10% by weight respectively of the total weight.

The weight ratio of blueberry powder, ginkgo leaf extract, medlar powder, and ginseng powder is 1 : 0.1 : 0.5 : 0.2.

The weight ratio of tomato powder, carrot powder, red radish powder, and alfalfa meal is 2 : 2 : 1.5 : 1.

Milk by adding, blending with various natural phytonutrients stated above has a balanced the nutrient structure and is easily digested and absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 24

Green milk, including fermented milk, contains natural phytonutrients of weight percentage 20%.

The natural phytonutrients contains grass powder, vegetable powder, and edible plant powder.

The grass powder is highland barley powder.

The edible plant powder or herbal cuisine is mixture of blueberry powder, medlar powder, ginseng powder, and ginkgo leaf extract.

The vegetable powder is mixture of tomato powder, carrot powder, red radish powder, and alfalfa meal.

The grass powder, vegetable powder and edible plant powder in natural phytonutrients take up 50%, 40%, 10% by weight respectively of the total weight.

The mixed weight ratio of blueberry powder, ginkgo leaf extract, medlar powder, and ginseng powder is 1 : 0.1 : 0.5 : 0.2.

The mixed weight ratio of tomato powder, carrot powder, red radish powder, and alfalfa meal is 2 : 2 : 1.5 : 1.

Milk by adding or blending with various natural phytonutrients stated above will balance the nutrient structure and be easily digested, absorbed. It provides human body with all necessary nutrients, which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

### Example 25

Green milk, including fermented milk, contains 20% natural phytonutrients or components from herbal cuisine from various sources by adding, blending or combining natural phytonutrients or components from herbal cuisine from various sources.

The natural phytonutrients contain barley grass powder, vegetable powder, and edible plant powder.

The grass powder is the mixture of barley grass powder, wheat grass powder and highland barley powder.

The edible plant powder or herbal cuisine is mixture of blueberry powder, medlar powder, ginseng powder, and ginkgo leaf extract.

The vegetable powder is mixture of tomato powder, carrot powder, red radish powder, and alfalfa meal.

The grass powder, vegetable powder and edible plant powder in natural phytonutrients take up 40%, 50%, 10% respectively of the total weight.

The weight ratio of barley grass powder, wheat grass powder, and highland barley powder is 3 : 2 : 1.

The weight ratio of blueberry powder, ginkgo leaf extract, medlar powder, and ginseng powder is 1 : 0.1 : 0.5 : 0.2.

The weight ratio of tomato powder, carrot powder, red radish powder, and alfalfa meal is 2 : 2 : 1.5 : 1.

Milk by adding, blending with various natural phytonutrients stated above has a balanced nutrient structure and is easily digested and absorbed. It provides human body with all necessary nutrients which may not be obtained or absorbed from daily diet. It is a safe and reliable way to take plentiful proteins, vitamins, mineral substances, natural chlorophylls and active enzymes. In addition to the benefits mentioned above and being 100% natural without any side effect, it improves shelf life and storage condition of green milk and green dairy products. It also improves product appearance, green milk.

Milk with natural phytonutrients can facilitate the absorption of protein, vitamin and mineral substance in milk. Statistics show that the green milk is of great nutrient value and the absorbed dose of proteins vitamins and mineral substances in green milk has a comparative growth rate of 12.5%∼35.7% comparing with milk only.

In sum, what are described above are the preferred embodiments of this invention. The coverage of this invention extends to every modification and alteration that based on the range of this invention.

## Claims

1. Green milk, including whole milk, skim milk, low/non fat milk, lactose-free milk, fermented milk and any other dairy products, is **characterized in that** the green milk contains by adding, blending or combining 0.1% - 20% natural phytonutrients or components from herbal cuisine from various sources.

2. According to Claim of Right No. 1, the green milk is **characterized in that** the natural phytonutrients or components from herbal cuisine from various sources are mainly but not limited to barley grass or juice powder, vegetable powder and all other edible botanic plant powders or components from herbal cuisine and juices either for daily consumption or special medical purpose.

3. According to Claim of Right No. 2, the green milk is **characterized in that** the grass powder is one, two, or more mixtures of barley grass powder, wheat grass powder, highland barley powder, buckwheat sprout powder, black barley grass powder, oat seeding powder, wild oat seeding powder.

4. According to Claim of Right No. 2, the green milk is **characterized in that** the edible plant powder or components from herbal cuisine is one or two or more mixtures of blueberry powder, medlar powder, ginseng powder, momordica grosvenori powder, grape seed powder, ginkgo leaf extract.

5. According to Claim of Right No.2, the green milk is **characterized in that** the vegetable powder is one or two or more mixtures of tomato powder, carrot powder, red radish powder and alfalfa meal.

6. According to Claim of Right No.2, the green milk is **characterized in that** the grass powder, vegetable powder and edible plant powder or components from herbal cuisine in natural phytonutrients at 10-70%, 20-70%, 10-20% of the total weight proportion.

7. According to Claim of Right No.3, the green milk is **characterized in that** the mixed weight percentage of barley grass powder, wheat grass powder, and highland barley powder is 3:2:1.

8. According to Claim of Right No.4, the green milk is **characterized in that** the mixed weight percentage of blueberry powder, ginkgo leaf extract, medlar powder, and ginseng powder is 1:0.1:0.5:0.2.

9. According to Claim of Right No.5, the green milk is **characterized in that** the mixed weight percentage of tomato powder, carrot powder, and red radish powder and alfalfa meal is 2:2:1.5:1.
